# FASCICULE DE BREVET EUROPEEN

(11) **EP 2 478 689 B1**
(45) Date de publication et mention de la délivrance du brevet: **02.11.2016**
(21) Numéro de dépôt: 10770557.6
(22) Date de dépôt: 14.09.2010
(51) Int. Cl.: H04M 1/82, H04M 1/723, H04M 7/12

(54) **PROCEDE DE NOTIFICATION D'UNE COMMUNICATION EN COURS A DES TERMINAUX CONNECTES A UNE PASSERELLE DOMESTIQUE**
VERFAHREN ZUR BENACHRICHTIGUNG EINES STATTFINDENDEN ANRUFES AN KOMMUNIKATIONSENDGERÄTE VERBUNDEN AN EINER PERSÖNLICHEN GATEWAY-VORRICHTUNG
METHOD FOR NOTIFYING THAT A COMMUNICATION IS IN PROGRESS TO THE TERMINALS CONNECTED TO A PERSONAL GATEWAY

(30) Priorité: 15.09.2009 FR 0956321
(43) Date de publication de la demande: 25.07.2012
(73) Titulaire: Orange, 75015 Paris (FR)
(72) Inventeur: CHAUVEL, Jérôme, F-22660 Trevou Treguignec (FR); TROVEL, Nelly, F-22560 Trebeurden (FR)
(74) Mandataire: Millet, Sandrine
(86) Numéro de dépôt international: PCT/FR2010/051907
(87) Numéro de publication internationale: WO 2011/033216

(56) Documents cités:
- EP-A1- 1 361 741
- WO-A1-00/04683
- WO-A1-2008/074119
- WO-A2-03/009529

## Description

La présente invention se rapporte de manière générale au domaine des télécommunications.

Plus précisément, l'invention concerne un procédé de notification, à un terminal téléphonique, placé derrière une passerelle d'accès à un réseau de télécommunication tel qu'un réseau voix sur IP (d'après l'anglais "Internet Protocol"), du fait qu'une communication est en cours sur un autre terminal téléphonique connecté à cette passerelle.

Avec le développement croissant des services voix sur IP, on connaît aujourd'hui de telles passerelles, encore appelées passerelles domestiques, derrière lesquelles il est possible de connecter une pluralité de terminaux sur des ports distincts, pour bénéficier de divers services, tels que l'accès à Internet, la télévision sur IP, la voix sur IP, etc.

Dans le contexte de l'invention, seuls sont considérés les terminaux téléphoniques connectés à une telle passerelle. A des fins de clarté et de concision, les terminaux mentionnés dans la suite de cette demande sont donc, en l'absence de précision contraire, des terminaux téléphoniques.

Les terminaux téléphoniques connectés derrière une telle passerelle domestique sont généralement associés à un même identifiant ou numéro téléphonique public sur le réseau de voix sur IP (par exemple, une adresse SIP) auquel est connectée la passerelle. Dans un tel cas, la passerelle est dite mono-ligne. Dans le cas contraire, où la passerelle domestique est associée à plusieurs identifiants publics, la passerelle est dite multi-lignes.

Or la plupart des passerelles domestiques sont mono-lignes, et fonctionnent généralement en mode mono-communication : une seule communication téléphonique simultanée entre un terminal externe et un des
terminaux connectés à la passerelle peut être établie. Lorsqu'une telle communication est en cours, il n'est alors pas possible d'initier un appel téléphonique depuis un autre terminal connecté à la passerelle, non impliqué dans cette communication. Or, aucune indication visuelle ne permet à un utilisateur de cet autre terminal de savoir que la ligne est occupée, seule une tonalité d'occupation jouée à l'utilisateur lorsqu'il décroche lui permettant d'obtenir cette information.

De plus, le même problème se pose pour les passerelles domestiques fonctionnant en mode multi-communications, c'est-à-dire permettant d'établir plusieurs communications téléphoniques simultanément, lorsque le nombre de terminaux téléphoniques connectés à une telle passerelle dépasse le nombre de communications gérables simultanément par cette passerelle.

EP1361741 A1 décrit un procédé de notification à des dispositifs connectés à une passerelle d'un signal d'occupation de ligne.

Un des buts de l'invention est de remédier à au moins une partie des inconvénients de la technique antérieure en fournissant un procédé de notification d'un appel, une passerelle domestique et un terminal téléphonique, permettant d'afficher sur ce terminal une information sur la disponibilité de la ou des lignes téléphoniques gérées par la passerelle domestique.

Cet objet est résolu par l'objet des revendications indépendantes. Des modes de réalisation préférés sont définis par les revendications dépendantes.

D'autres caractéristiques et avantages apparaîtront à la lecture d'un mode de réalisation préféré décrit en référence aux figures dans lesquelles:
- la figure 1 représente un système de communication dans lequel est mise en oeuvre l'invention,
- la figure 2 représente des étapes du procédé de notification selon l'invention, dans ce mode de réalisation de l'invention,
- la figure 3 représente un diagramme de flux illustrant une utilisation du procédé de notification selon l'invention,
- et la figure 4 représente un diagramme de flux illustrant une autre utilisation du procédé de notification selon l'invention.

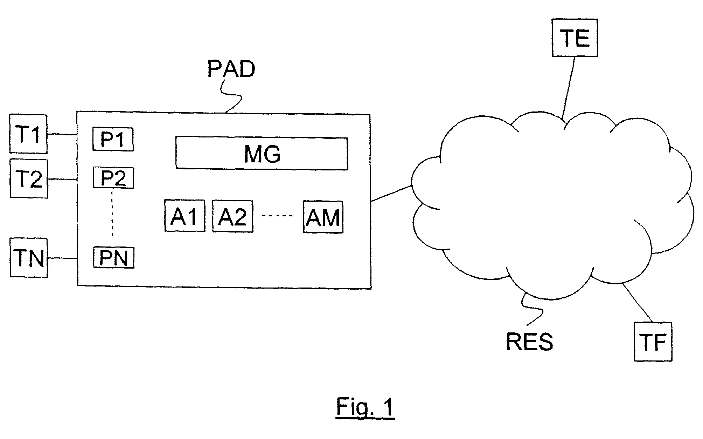

Selon un mode préféré de réalisation de l'invention représenté à la figure 1, le procédé de notification selon l'invention est implémenté dans une passerelle domestique PAD, connecté à un réseau RES de voix sur IP auquel sont connectés deux terminaux téléphoniques distants TE et TF.

La passerelle domestique PAD est équipée d'une pluralité de ports de connexion, P1, P2, ..., PN, sur lesquels il est possible de connecter une pluralité de terminaux. Dans l'exemple envisagé sur la figure 1, des terminaux T1, T2,..., TN sont connectés respectivement sur les ports P1, P2,..., PN de la passerelle domestique PAD.

Les ports P1 et P2 sont, dans ce mode de réalisation de l'invention, des ports Ethernet, les terminaux T1 et T2 étant des terminaux dialoguant avec la passerelle domestique PAD selon le protocole de signalisation SIP (d'après l'anglais "Session Initiation Protocol"). Bien sûr, l'invention fonctionne également avec d'autres types de terminaux, connectés à des ports compatibles avec ces terminaux. Par exemple, le terminal TN est un téléphone analogique, connecté au port PN qui est un port FXS (d'après l'anglais "Foreign exchange Subscriber"). Le protocole de communication utilisé entre le terminal TN et la passerelle domestique PAD est dans ce cas le protocole V.23, tel que décrit dans la recommandation CCITT « 600/1200 baud modem standardized for use in the general switched telephone network » (1988). D'autres terminaux sont par exemple des terminaux DECT (d'après l'anglais "Digital Enhanced Cordless Télécommunications") raccordés à la passerelle domestique PAD via des ports USB (d'après l'anglais "Universal Serial Bus"), ou des terminaux SIP raccordés à la passerelle domestique PAD via des ports WiFi (Wireless Fidelity, selon la norme "Institute of Electronical and Electronics Engineers" (IEEE) 802.11).

De plus, dans ce mode de réalisation de l'invention, la passerelle domestique PAD est une passerelle mono-ligne fonctionnant en mode multi-communications. Autrement dit plusieurs communications téléphoniques sont gérables simultanément par la passerelle domestique PAD. Par exemple, alors qu'un premier appel est établi entre le terminal T1 et le terminal TE, le terminal T2 établit un deuxième appel avec le terminal TF sans relâcher le premier appel en cours. Ceci est possible grâce à la gestion par la passerelle domestique PAD d'autant d'automates d'appels A1 à AM, que de terminaux impliqués dans des appels simultanés à gérer. Ces automates sont implémentés sous forme logicielle et/ou matérielle, et utilisent différents protocoles de communication. Par exemple si l'automate A1 gère un appel impliquant le terminal T1, il utilise le protocole de communication SIP et communique avec le terminal T1 via le port P1. De même, si l'automate AM gère un appel impliquant le terminal TN, il utilise à la fois le protocole de communication V.23 pour communiquer avec le terminal TN via le port PN, et le protocole de communication SIP pour communiquer avec le réseau RES.

La passerelle domestique PAD différencie les terminaux T1 à TN par autant d'identifiants locaux à la passerelle, mais n'est joignable du réseau RES que par un seul identifiant téléphonique. Ainsi:
- un appel entrant, c'est-à-dire initié depuis le réseau RES, est signalé par la passerelle domestique à tous les terminaux T1 à TN. L'appel est ensuite établi avec le premier de ces terminaux qui décroche.
- un appel sortant peut être initié indifféremment depuis n'importe lequel des terminaux T1 à TN connectés à la passerelle domestique PAD.

Bien sûr d'autres modes de réalisation de l'invention sont possibles, dans lesquels la passerelle domestique PAD est associée à plusieurs identifiants téléphoniques publiques, c'est-à-dire est multi-lignes, ou dans lesquels la passerelle domestique PAD est en mode mono-communication.

Enfin la passerelle domestique PAD comporte un module de gestion MG, supervisant tous les automates A1 à AM et dans lequel est implémenté le procédé de notification selon l'invention. Il est à noter que tous les modules logiciels/matériels de la passerelle domestique PAD ne sont pas représentés sur la **figure 1****,** par exemple les modules physiques d'interfaçage réseau vers le réseau RES.

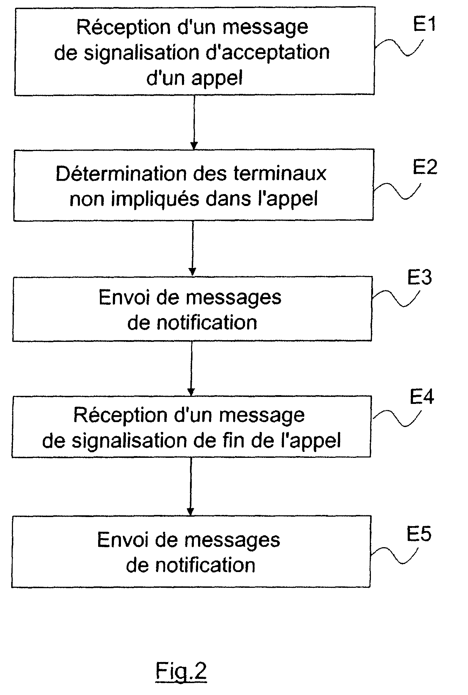

En référence à la **figure 2****,** le procédé de notification selon l'invention est maintenant représenté sous la forme d'un algorithme comportant des étapes E1 à E5. Le procédé de notification est mis en oeuvre lors de l'établissement d'une communication passant par la passerelle domestique PAD et impliquant au moins un des terminaux T1 à TN, par exemple seulement le terminal T1. Cette communication est un appel voix sur IP, mono ou multimédia.

L'étape E1 est la réception d'un message de signalisation d'acceptation de cet appel par la passerelle domestique PAD, lors de la phase d'établissement de cet appel. Un contexte d'appel est créé et maintenu par la passerelle domestique PAD dans un automate d'appel pendant toute la durée de vie de cet appel. Ce contexte mémorise les paramètres liés à cet appel, notamment son état, et le port sur lequel il a été pris, ici le port P1.

L'étape suivante E2 est la détermination des terminaux non impliqués dans cet appel. Pour cela, la passerelle domestique PAD consulte le contexte de cet appel, et identifie tous les ports non inscrits dans ce contexte. Dans cet exemple, il s'agit des ports P2 à PN. La passerelle en déduit les terminaux non impliqués dans cet appel, c'est-à-dire ceux associés à ces ports, à savoir les terminaux T2 à TN.

L'étape suivante E3 est l'envoi de messages de notification d'appel en cours aux terminaux déterminés à l'étape E2, par la passerelle domestique PAD. La nature des ports identifiés à l'étape E2 permet à la passerelle domestique PAD de sélectionner le protocole de signalisation à utiliser pour envoyer ces messages aux terminaux T2 à TN.

Ainsi, le port P2 étant un port Ethernet, la passerelle domestique PAD envoie un message de notification d'appel en cours au format SIP au terminal T2. Ce message est un message "SIP MESSAGE" comportant une ou plusieurs valeurs de paramètres dans son corps de message.

De même, le port PN étant un port FXS, la passerelle domestique PAD envoie un message de notification d'appel en cours dans un format V.23 modifié au terminal TN. En effet les messages V.23 actuels à destination d'un terminal non impliqué dans un appel n'incluent pas d'indication du fait que cet appel est établi. Les messages de notification d'appel en cours envoyés par la passerelle domestique PAD à des terminaux analogiques ou DECT sont donc des messages propriétaires, dans un format V.23 comportant un ou plusieurs paramètres supplémentaires par rapport à la norme V.23.

Les messages de notification d'appel en cours envoyés dans cette étape E3 comportent dans un ou plusieurs paramètres:
- une indication du fait qu'un appel est en cours, dans une première variante de réalisation de l'invention où les terminaux T1 à TN gèrent eux-mêmes un compteur du nombre d'appels en cours sur la passerelle domestique,
- ou le nombre d'appels en cours sur la passerelle domestique, dans une deuxième variante de réalisation de l'invention où les terminaux affichent simplement l'information fournie par la passerelle domestique PAD dans les messages de notification d'appel en cours que celle-ci leur envoie. Dans ce cas ce nombre est éventuellement 0, pour signaler qu'il n'y a aucun appel en cours,
- et éventuellement l'identité d'un ou plusieurs terminaux impliqués dans le ou les appels en cours lors de cette étape E3, la durée de ces appels, leurs dates de début, et la nature de ces appels, par exemple s'il s'agit d'appels entrants, sortants, locaux, mono ou multimédia.

Il est à noter que dans ce mode de réalisation de l'invention, les messages de notification d'appel en cours ne sont envoyés qu'aux terminaux non impliqués dans l'appel pour lequel un message de signalisation d'acceptation d'appel a été reçu à l'étape E1. On suppose donc, dans ce mode de réalisation de l'invention, que les terminaux impliqués dans un appel tiennent compte de cet appel lorsqu'ils comptent le nombre d'appels en cours selon la première variante de réalisation de l'invention, ou lorsqu'ils reçoivent l'indication du nombre d'appels en cours selon la deuxième variante de réalisation de l'invention. Il est de plus à noter que dans ce mode de réalisation, lorsqu'un terminal impliqué dans un appel reçoit un message de notification d'appel en cours suite à l'établissement d'un autre appel passant par la passerelle domestique PAD, la réception de ce message de notification sur ce terminal peut provoquer une microcoupure du flux média de quelques millisecondes s'il est connecté en FXS à la passerelle domestique PAD.

Cependant d'autres modes de réalisation sont possibles dans lesquels les messages de notification d'appel en cours sont envoyés à tous les terminaux connectés à la passerelle domestique PAD, ou seulement à ceux dont les ports de connexion sont libres, c'est-à-dire seulement aux terminaux impliqués dans aucun appel. Il est à noter que dans ce dernier cas, les messages de notification ne provoquent pas de microcoupures de flux média puisque les terminaux recevant ces messages n'ont pas d'appel en cours. De plus également dans ce dernier cas il est à noter que seule la deuxième variante de réalisation, dans laquelle les messages de notification comportent le nombre d'appels en cours, fonctionne correctement en mode multi-communications. En effet dans ce dernier cas, les terminaux impliqués dans un appel ne sont pas avertis qu'un autre appel est en cours d'établissement, et de ce fait ne peuvent tenir eux-mêmes le compte exact du nombre d'appels en cours passant par la passerelle domestique PAD. Il est donc à noter que, dans ce dernier cas, seuls les terminaux libres disposent d'une information fiable sur le nombre d'appels en cours. Cela permet néanmoins à un utilisateur souhaitant passer un appel depuis un terminal libre, de savoir si cet appel est possible.

L'étape suivante E4 est la réception par la passerelle domestique PAD d'un message de signalisation indiquant la fin de l'appel pour lequel un message de signalisation d'acceptation d'appel avait été reçu à l'étape E1.

Il est à noter que cette étape E4 ne suit en général pas immédiatement l'étape E3. Si des événements liés à d'autres appels sont survenus entre l'étape E3 et l'étape E4, celle-ci est donc éventuellement précédée d'envois par la passerelle domestique PAD de messages de notification déclenchés par ces événements. Ces messages de notification indiquent par exemple qu'un nouvel appel est en cours, ou qu'un précédent appel qui était en cours vient d'être relâché.

Enfin l'étape suivante E5, déclenchée par l'étape E4, est l'envoi de messages de notification par la passerelle domestique PAD aux terminaux T2 à TN, signalant la fin de l'appel dont l'établissement leur avait été notifié à l'étape E3. Comme à l'étape E3, le protocole de communication utilisé par la passerelle domestique PAD pour envoyer l'un de ces messages dépend du type de port sur lequel est connecté le terminal destinataire de ce message. Ainsi le message de notification signalant la fin de l'appel envoyé au terminal T2 est un message "SIP MESSAGE", alors que le message de notification signalant la fin de l'appel envoyé au terminal TN est un message au format V.23 modifié. De plus, les messages de notification envoyés dans cette étape E5 indiquent:
- une indication du fait que l'appel a été relâché, dans une première variante de réalisation de l'invention où les terminaux T1 à TN gèrent eux-mêmes un compteur du nombre d'appels en cours sur la passerelle domestique,
- ou le nouveau nombre d'appels en cours sur la passerelle domestique PAD, dans une deuxième variante de réalisation de l'invention où les terminaux affichent simplement l'information fournie par la passerelle domestique PAD dans les messages de notification que celle-ci leur envoie. Dans ce cas ce nombre est éventuellement 0, pour signaler qu'il n'y a plus aucun appel en cours,
- et éventuellement l'identité d'un ou plusieurs terminaux impliqués dans le ou les appels restant en cours, la durée de ces appels, leurs dates de début, et la nature de ces appels, par exemple s'il s'agit d'appels entrants, sortants, locaux, mono ou multimédia.

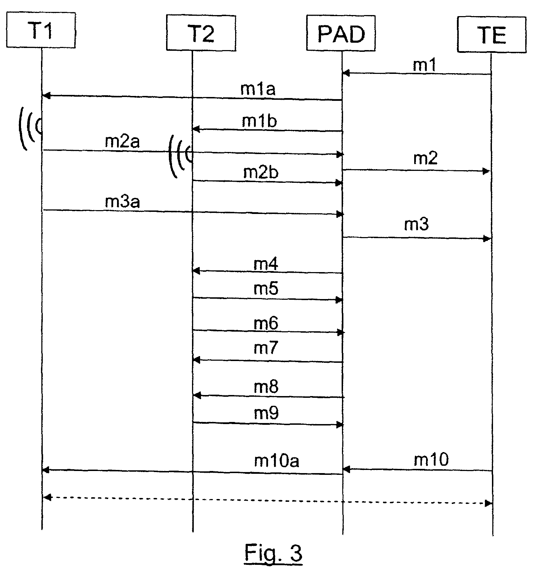

On décrit maintenant, en relation avec la figure 3, un exemple d'utilisation de l'invention dans le cas d'un appel entrant, initié par le terminal distant TE. On suppose ici pour simplifier que le terminal distant TE est un terminal supportant le protocole SIP, et que seuls les terminaux T1 et T2 sont connectés à la passerelle domestique PAD.

La composition, sur le terminal distant TE, de l'identifiant téléphonique associé à la passerelle domestique PAD, déclenche l'envoi par le terminal distant TE d'un message m1 "SIP Invite" comportant cet identifiant, dans le réseau RES, qui l'achemine vers la passerelle domestique PAD.

A la réception du message m1, la passerelle domestique PAD envoie en parallèle deux messages m1 a et m1 b "SIP Invite" à destination des terminaux T1 et T2 pour les notifier de cet appel entrant.

Il est à noter que la passerelle domestique PAD:
- remplace, avant de transmettre un message reçu depuis le réseau RES à un terminal connecté à un port, l'identifiant téléphonique publique associé à la passerelle domestique PAD dans ce message par un identifiant téléphonique local associé à ce port,
- et remplace, avant de transmettre au réseau RES un message reçu depuis un terminal connecté à un port, l'identifiant téléphonique local associé à ce port dans ce message par l'identifiant publique associé à la passerelle domestique PAD.

Ainsi par exemple les messages m1 a et m1 b diffèrent du message m1 par le fait que le message m1 a comporte un identifiant téléphonique local associé au port P1 et le message m1 b comporte un identifiant téléphonique local associé au port P2.

Lorsque les terminaux respectifs T1 et T2 reçoivent respectivement les messages m1 a et m1 b, ils alertent l'utilisateur et transmettent respectivement des messages m2a et m2b, qui sont des messages "SIP 180 Ringing" de retour de sonnerie comportant en adresses source les identifiants locaux des terminaux respectifs T1 et T2, à la passerelle domestique PAD. La passerelle domestique retransmet ces messages sous la forme d'un seul message m2 "SIP 180 Ringing" de retour de sonnerie, comportant l'identifiant public de la passerelle comme adresse source, au terminal T2.

On suppose maintenant qu'un utilisateur décroche le terminal T1. Celui-ci envoie alors un message m3a "SIP 200 OK" à la passerelle domestique PAD. A la réception de ce message m3a, la passerelle domestique PAD transmet ce message au terminal TE, ce qui correspond au message m3, puis stoppe la sonnerie du terminal T2 en lui envoyant un message m4 "SIP CANCEL". Le terminal T2 répond positivement à ce message en envoyant un message m5 "SIP 200 OK" à la passerelle domestique PAD, puis un message m6 "SIP 487 Request terminated", que la passerelle domestique PAD acquitte avec un message m7 "SIP ACK" envoyé au terminal T2.

Le message m3a étant un message de signalisation d'acceptation de l'appel entrant, sa réception fait partie de l'étape E1 du procédé de notification selon l'invention. En parallèle ou après les échanges de messages décrits ci-dessus, suite à la réception du message m3a la passerelle domestique PAD détermine donc les terminaux non impliqués dans cet appel, qui sont connectés à la passerelle domestique PAD, selon l'étape E2 du procédé de notification selon l'invention. Dans cet exemple d'utilisation de l'invention, seuls les ports P1 et P2 sont activés et il existe un contexte d'appel associé au port P1. La passerelle domestique PAD détermine donc que seul le terminal T2 doit être notifié qu'une communication est en cours sur un autre terminal connecté à la passerelle.

Pour cela, selon l'étape E3 du procédé de notification selon l'invention, la passerelle domestique PAD envoie un message m8 "SIP INFO" de notification d'appel en cours au terminal T2. A la réception du message m8, le terminal T2 y répond positivement par l'envoi d'un message m9 "SIP 200 OK" à la passerelle domestique PAD, puis signale visuellement qu'un appel est en cours passant par la passerelle domestique PAD. Cette signalisation se fait par exemple par affichage d'un texte sur un écran du terminal ou en allumant une diode lumineuse, ou en la faisant clignoter. Suivant les variantes de réalisation de l'invention, soit le terminal T2 utilise l'information contenue dans le message m8 pour compter lui-même le nombre d'appels en cours, soit ce nombre est directement contenu dans le message m8. Dans cet exemple d'utilisation de l'invention, un seul appel étant en cours, le terminal T2 affiche par exemple "1 appel en cours" sur un écran de visualisation.

En parallèle ou préalablement à ces étapes E1 à E3, la passerelle domestique PAD reçoit un message m10 "SIP ACK" d'acquittement du message m3 de la part du terminal TE et le transmet au terminal T1, ce qui correspond au message m10a sur la **figure 3****.** A la réception de ce message par le terminal T1, une communication est établie entre le terminal T1 et le terminal TE.

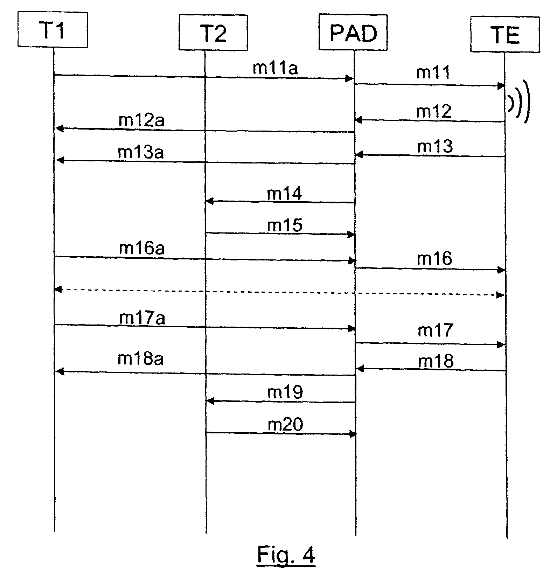

Lorsque l'un des utilisateurs des terminaux T1 ou TE raccroche, les étapes E4 et E5 du procédé de notification sont mises en oeuvre. La mise en oeuvre de ces étapes dans un exemple d'utilisation de l'invention est détaillée plus loin en relation avec la **figure 4****.**

On décrit maintenant, en relation avec la **figure 4****,** un autre exemple d'utilisation de l'invention dans le cas d'un appel sortant, initié par le terminal T1. Comme dans l'exemple d'utilisation de l'invention décrit en relation avec la **figure 3****,** on suppose pour simplifier que le terminal distant TE est un terminal supportant le protocole SIP, et que seuls les terminaux T1 et T2 sont connectés à la passerelle domestique PAD.

La composition, sur le terminal T1, d'un identifiant téléphonique associé au terminal TE, déclenche l'envoi par le terminal T1 d'un message m11 a "SIP Invite" comportant cet identifiant, à la passerelle domestique PAD, qui le transmet par le réseau RES au terminal TE, ce qui correspond au message m11 sur la **figure 4****.**

Le message m11 est intercepté dans le réseau RES par une plate-forme IMS qui authentifie la passerelle domestique PAD avant de transmettre le message m11 au terminal TE. Les échanges entre la passerelle domestique PAD et la plate-forme IMS lors de cette authentification ne sont pas représentés sur la **figure 4****.**

A la réception du message m11, le terminal TE sonne, et envoie en parallèle un message m12 "SIP 180 Ringing" de retour de sonnerie à la passerelle domestique PAD, qui le transmet au terminal T1, ce qui correspond au message m12a sur la **figure 4****.** On suppose ici qu'un utilisateur du terminal TE décroche, ce qui provoque l'envoi par le terminal TE d'un message m13 "SIP 200 OK" à la passerelle domestique PAD, qui le transmet au terminal T1 ce qui correspond au message m13a.

Le message m13 "SIP 200 OK" est un message de signalisation d'acceptation d'appel. Sa réception par la passerelle domestique PAD s'effectue donc selon l'étape E1 du procédé de notification selon l'invention. La passerelle domestique PAD détermine ensuite les terminaux non impliqués dans cet appel, qui sont connectés à la passerelle domestique PAD, selon l'étape E2 du procédé de notification selon l'invention. Dans cet exemple d'utilisation de l'invention, seuls les ports P1 et P2 sont activés et il existe un contexte d'appel associé au port P1. La passerelle domestique PAD détermine donc que seul le terminal T2 doit être notifié qu'une communication est en cours sur un autre terminal connecté à la passerelle.

Pour cela, selon l'étape E3 du procédé de notification selon l'invention, la passerelle domestique PAD envoie un message m14 "SIP INFO" de notification d'appel en cours au terminal T2. A la réception du message m14, le terminal T2 y répond positivement par l'envoi d'un message m15 "SIP 200 OK" à la passerelle domestique PAD, puis signale visuellement qu'un appel est en cours passant par la passerelle domestique PAD. Dans cet exemple d'utilisation de l'invention, un seul appel étant en cours, le terminal T2 affiche par exemple "un appel sortant en cours " sur un écran de visualisation.

En parallèle ou préalablement à ces étapes E1 à E3, la passerelle domestique PAD reçoit un message m16a "SIP ACK" d'acquittement du message m13 de la part du terminal T1, et transmet cet acquittement au terminal TE, ce qui correspond au message m16. A la réception du message m16 par le terminal TE, une communication est établie entre le terminal T1 et le terminal TE.

On suppose maintenant que l'utilisateur du terminal T1 raccroche. Cela provoque l'envoi, par le terminal T1, d'un message m17a "SIP BYE" à la passerelle domestique PAD, qui le transmet au terminal TE, transmission qui correspond au message m17. Le terminal TE répond positivement à ce message m17 par un message m18 "SIP 200 OK" envoyé à la passerelle domestique PAD, qui le transmet au terminal T1, ce qui correspond au message m18a.

Le message m17a "SIP BYE" étant un message de signalisation de fin d'appel, sa réception par la passerelle domestique PAD s'effectue selon l'étape E4 du procédé de notification selon l'invention. En parallèle ou après le traitement des messages de signalisation liés à la fin de l'appel et décrits précédemment, la passerelle domestique PAD met en oeuvre l'étape E5 du procédé de notification selon l'invention.

Pour cela, la passerelle domestique PAD envoie au terminal T2, non impliqué dans la communication qui vient d'être relâchée, un message m19 "SIP INFO" comportant une indication de fin d'appel. Le terminal T2 répond positivement à ce message par un message m20 "SIP 200 OK" et fait disparaître de son écran de visualisation le texte affiché précédemment à la réception du message m14. Il y affiche éventuellement à la place un autre texte indiquant qu'aucun appel passant par la passerelle domestique PAD n'est en cours.

Ces exemples d'utilisation de l'invention ne sont pas limitatifs. En effet, l'invention fonctionne également pour les appels locaux entre terminaux connectés à la passerelle domestique PAD et passant par cette passerelle. De plus les étapes E1 à E5 du procédé de notification selon l'invention ne se suivent pas forcément rigoureusement, d'autres étapes pouvant s'intercaler entre elles par exemple si plusieurs communications sont établies simultanément.

## Revendications

1. Procédé de notification d'un appel impliquant un dispositif de communication (T1) connecté à une passerelle domestique (PAD), l'établissement dudit appel impliquant le passage d'un flux de signalisation par ladite passerelle domestique (PAD), ledit procédé comportant une étape (E1) de réception par la passerelle d'un message (m13) de signalisation d'acceptation dudit appel,
**caractérisé en ce que** la passerelle est apte à gérer plusieurs communications simultanément et **en ce que** le procédé comporte:
- une étape (E2) de détermination par la passerelle domestique d'au moins un dispositif de communication (T2) connecté à ladite passerelle domestique (PAD),
- et une étape (E3) d'envoi audit au moins un dispositif de communication déterminé (T2) d'un message (m14) de notification d'appel en cours, ledit message de notification comprenant un nombre d'appels en cours sur la passerelle domestique de sorte que le dispositif de communication affiche le nombre d'appels en cours sur la passerelle domestique.

2. Procédé selon la revendication 1, **caractérisé en ce que** ladite étape (E3) d'envoi est suivie d'une étape (E4) de réception d'un message (m17a) signalant la fin dudit appel, et d'une étape (E5) d'envoi d'un message (m19) de notification de fin d'appel audit au moins un dispositif de communication (T2), ledit message de notification de fin d'appel comprenant un nouveau nombre d'appels en cours sur la passerelle domestique .

3. Procédé selon la revendication 1, **caractérisé en ce que** les étapes de détermination (E2) et d'envoi (E3) sont répétées lorsque d'autres appels sont établis alors que ledit appel est en cours..

4. Procédé selon la revendication 1, **caractérisé en ce que** ledit message (m14) de notification d'appel en cours indique une ou plusieurs identités de dispositif de communication ou d'utilisateurs impliqués dans le ou lesdits appels en cours.

5. Passerelle domestique (PAD) comportant des moyens de connexion à un réseau (RES) de communication, des moyens (P1, ..., PN) de connexion à une pluralité de dispositifs de communication (T1, ...,TN), et des moyens de réception d'un message (m13) de signalisation d'acceptation d'un appel impliquant un dispositif (T1) de ladite pluralité de dispositifs, ledit appel impliquant le passage d'un flux de signalisation dans ladite passerelle domestique (PAD), **caractérisée en ce qu'**elle est apte à gérer simultanément plusieurs communications téléphoniques et **en ce qu'**elle comporte en outre:
- des moyens de détermination d'au moins un dispositif (T2) connecté à ladite passerelle domestique (PAD) et n'étant impliqué dans aucun appel impliquant le passage d'un flux de signalisation par ladite passerelle domestique,
- et des moyens d'envoi audit au moins un dispositif déterminé (T2) d'un message (m14) de notification d'appel en cours, ledit message de notification comprenant un nombre d'appels en cours sur la passerelle domestique de sorte que le dispositif déterminé affiche le nombre d'appels en cours sur la passerelle domestique.

6. Dispositif de communication (T2) comportant des moyens d'affichage d'une information indiquant qu'un ou plusieurs appels sont en cours, **caractérisé en ce qu'**il comporte des moyens de réception d'un message (m14, m19) de notification en provenance d'une passerelle domestique à laquelle le dispositif de communication est connecté et envoyé selon le procédé de notification selon la revendication 1.

7. Programme d'ordinateur comportant des instructions pour mettre en oeuvre le procédé selon l'une quelconque des revendications 1 à 4, lorsqu'il est exécuté sur un ordinateur.

8. Système **caractérisé en ce qu'**il comporte :
- une passerelle domestique (PAD) selon la revendication 5,
- et au moins un dispositif de communication (T2) selon la revendication 6.

## Patentansprüche

1. Verfahren zur Bekanntgabe eines Anrufs, an dem eine Kommunikationsvorrichtung (T1) beteiligt ist, die an ein privates Gateway (PAD) angeschlossen ist, wobei das Herstellen des Anrufs das Durchgehen eines Signalisierungsstroms durch das private Gateway (PAD) bedingt, wobei das Verfahren einen Schritt (E1) zum Empfangen durch das Gateway einer Signalisierungsmeldung (m13) zur Annahme des Anrufs umfasst,
**dadurch gekennzeichnet, dass** das Gateway geeignet ist, mehrere Kommunikationen gleichzeitig zu verwalten, und dass das Verfahren Folgendes umfasst:
- einen Schritt (E2) des Bestimmens durch das private Gateway mindestens einer Kommunikationsvorrichtung (T2), die an das private Gateway (PAD) angeschlossen ist,
- und einen Schritt (E3) des Sendens an die mindestens eine bestimmte Kommunikationsvorrichtung (T2) einer Meldung (m14) zur Bekanntgabe des laufenden Anrufs, wobei die Bekanntgabemeldung eine Anzahl laufender Anrufe auf dem privaten Gateway derart umfasst, dass die Kommunikationsvorrichtung die Anzahl laufender Anrufe auf dem privaten Gateway anzeigt.

2. Verfahren nach Anspruch 1, **dadurch gekennzeichnet, dass** auf den Schritt (E3) des Sendens ein Schritt (E4) des Empfangens einer Meldung (m17a) folgt, der das Ende des Anrufs meldet, und ein Schritt (E5) des Sendens einer Bekanntgabemeldung (m19) des Anrufendes an die mindestens eine Kommunikationsvorrichtung (T2), wobei die Bekanntgabemeldung des Anrufendes eine neue Anzahl laufender Anrufe auf dem privaten Gateway umfasst.

3. Verfahren nach Anspruch 1, **dadurch gekennzeichnet, dass** die Schritte des Bestimmens (E2) und des Sendens (E3) wiederholt werden, wenn andere Anrufe hergestellt werden, während der Anruf läuft.

4. Verfahren nach Anspruch 1, **dadurch gekennzeichnet, dass** die laufende Anrufbekanntgabemeldung (m14) eine oder mehrere Identitäten von Kommunikationsvorrichtungen oder Benutzern, die an dem oder den laufenden Anrufen beteiligt ist/sind, angibt.

5. Privates Gateway (PAD), das Mittel zum Anschließen an ein Kommunikationsnetzwerk (RES), Mittel (P1, ..., PN) zum Anschließen an eine Mehrzahl von Kommunikationsvorrichtungen (T1, ..., TN) sowie Mittel zum Empfangen einer Meldung (m13) zur Annahmesignalisierung eines Anrufs umfasst, an dem eine Vorrichtung (T1) der Mehrzahl von Vorrichtungen beteiligt ist, wobei der Anruf das Durchgehen eines Signalisierungsstroms in das private Gateway (PAD) bedingt, **dadurch gekennzeichnet, dass** es geeignet ist, gleichzeitig mehrere Telefonkommunikationen zu verwalten, und dass es außerdem Folgendes umfasst:
- Mittel zum Bestimmen mindestens einer Vorrichtung (T2), die an das private Gateway (PAD) angeschlossen ist und nicht an einem Anruf beteiligt ist, der das Durchgehen eines Signalisierungsstroms durch das private Gateway bedingt,
- und Mittel zum Senden an die mindestens eine bestimmte Vorrichtung (T2) einer Meldung (m14) zur Bekanntgabe eines laufenden Anrufs, wobei die Bekanntgabemeldung eine Anzahl laufender Anrufe auf dem privaten Gateway derart umfasst, dass die bestimmte Vorrichtung die Anzahl auf dem privaten Gateway laufender Anrufe anzeigt.

6. Kommunikationsvorrichtung (T2), die Mittel zum Anzeigen einer Information umfasst, die angibt, dass ein oder mehrere Anrufe laufen, **dadurch gekennzeichnet, dass** sie Mittel zum Empfangen einer Bekanntgabemeldung (m14, m19), die von einem privaten Gateway kommt, umfasst, an das die Kommunikationsvorrichtung angeschlossen ist, und die gemäß dem Bekanntgabeverfahren nach Anspruch 1 gesendet wird.

7. Computerprogramm, das Anweisungen umfasst, um das Verfahren nach einem der Ansprüche 1 bis 4 umzusetzen, wenn es auf einem Computer ausgeführt wird.

8. System, **dadurch gekennzeichnet, dass** es Folgendes umfasst:
- ein privates Gateway (PAD) nach Anspruch 5,
- und mindestens eine Kommunikationsvorrichtung (T2) nach Anspruch 6.

## Claims

1. Method of notification of a call involving a communication device (T1) connected to a domestic gateway (PAD), the establishment of said call involving the passage of a signalling stream through said domestic gateway (PAD), said method comprising a step (E1) of reception by the gateway of a message (m13) signalling acceptance of said call,
**characterized in that** the gateway is able to manage several communications simultaneously and **in that** the method comprises:
- a step (E2) of determination by the domestic gateway of at least one communication device (T2) connected to said domestic gateway (PAD),
- and a step (E3) of dispatching to said at least one determined communication device (T2) a call-in-progress notification message (m14), said notification message comprising a number of calls in progress on the domestic gateway so that the communication device displays the number of calls in progress on the domestic gateway.

2. Method according to Claim 1, **characterized in that** said dispatching step (E3) is followed by a step (E4) of receiving a message (ml7a) signalling the end of said call, and by a step (E5) of dispatching an end-of-call notification message (m19) to said at least one communication device (T2), said end-of-call notification message comprising a new number of calls in progress on the domestic gateway.

3. Method according to Claim 1, **characterized in that** the steps of determination (E2) and of dispatching (E3) are repeated when other calls are established whilst said call is in progress.

4. Method according to Claim 1, **characterized in that** said call-in-progress notification message (m14) indicates one or more identities of communication device or of users involved in said call or calls in progress.

5. Domestic gateway (PAD) comprising means of connection to a communication network (RES), means (P1,...,PN) of connection to a plurality of communication devices (T1,...,TN), and means for receiving a message (m13) signalling acceptance of a call involving a device (T1) of said plurality of devices, said call involving the passage of a signalling stream in said domestic gateway (PAD), **characterized in that** it is able to manage several telephone communications simultaneously and **in that** it furthermore comprises:
- means for determining at least one device (T2) connected to said domestic gateway (PAD) and not being involved in any call involving the passage of a signalling stream through said domestic gateway,
- and means for dispatching to said at least one determined device (T2) a call-in-progress notification message (m14), said notification message comprising a number of calls in progress on the domestic gateway so that the determined device displays the number of calls in progress on the domestic gateway.

6. Communication device (T2) comprising means for displaying an information item indicating that one or more calls are in progress, **characterized in that** it comprises means for receiving a notification message (m14, m19) originating from a domestic gateway to which the communication device is connected and dispatched according to the method of notification according to Claim 1.

7. Computer program comprising instructions for implementing the method according to any one of Claims 1 to 4, when it is executed on a computer.

8. System **characterized in that** it comprises:
- a domestic gateway (PAD) according to Claim 5,
- and at least one communication device (T2) according to Claim 6.
